# EUROPEAN PATENT SPECIFICATION

(11) **EP 4 577 037 B1**
(45) Date of publication and mention of the grant of the patent: **10.06.2026**
(21) Application number: 23715078.4
(22) Date of filing: 23.03.2023
(51) Int. Cl.: A01K 11/00

(54) **SYSTEM FOR READING TAGS FOR LIVESTOCK**
LESESYSTEM VON VIEHMARKIERUNGEN
SYSTÈME DE LECTURE D'ÉTIQUETTES POUR BÉTAIL

(43) Date of publication of application: 02.07.2025
(73) Proprietor: Datamars SA, 6814 Lamone (CH)
(72) Inventor: ZACCHELLO, Fabio, 21050 Cairate (VA) (IT); BOLLINI, Filippo, 21040 Jerago con Orago (VA) (IT); PACHOUD, Damien, 6963 Pregassona (CH)
(74) Representative: M. Zardi & Co S.A.
(86) International application number: PCT/EP2023/057553
(87) International publication number: WO 2024/193830

(56) References cited:
- WO-A1-2010/066429
- WO-A1-2017/034776
- WO-A1-2017/168375
- WO-A1-2018/180455
- CN-A- 115 669 556
- US-A1- 2019 380 311
- US-A1- 2022 232 805

## Description

### Field of application

The present invention relates to a system for reading tag for livestock, in particular to a system including a reader for identifying an animal from a radio signal emitted by an animal's tag.

The system may be used for applications such as weighting the animal, guiding the animal among a plurality of paths (sorting or drafting), controlling milking by identifying each single cow, feeding, drinking or other phases in the life cycle of the animal.

### Prior art

Systems for identifying animal's tags are known and used in several applications, such as WO 2018/180455 A1, CN 115 669 556 A, WO 2010/066429 A1 or WO 2017/168375 A1.

For instance, in an application for measuring the weight of the animal, which is given here only as an example, an animal may step on a weighting platform to be weighted. The weight is measured, at a position where a scale is arranged. An RFID reader device may identify the animal by means of a passive RFID tag attached to it. The passive tag communicates with the RFID reader in Low Frequency, according to the ISO standard 11784/11785. The tag is passive since not provided with a battery; it is enabled to communicate only in presence and in proximity to the RFID reader. The tag stores a unique identifier of the animal. Therefore, the weight of the animal may be associated to its unique identifier, by application.

The system for reading animal's tag may be for many other purposes other than weighting. To cite another, the system may be used to lead the animal towards one among a plurality of paths (sorting system). In this kind of applications, the reader may detect information concerning the animal from its tag, such as the age, sex, health status, and determine the path to be followed by the animal, depending on the age, sex, health status (animals of different age sex, health status may be processed according to different treatments). Of course, information other than the age, sex, health status may be processed.

In the systems as known, the tag of the animal is a low frequency (LF) passive tag, as cited above operating according to the ISO 11784 and ISO 11785 standards. LF passive tags are readable only at short range (few meters from the reader) and one tag at a time (single read technology) Accordingly, the reader may read information stored in the tag , if one single tag is present in the range of the reader. Otherwise, if more than one tag is present in the range of the reader, no one of the tags can be read.

However, (especially) large dairy farms are provided with lot of electronic devices that generate electromagnetic noise for the reader device of LF tags. Electromagnetic noises are generated not only by electronic devices for data acquisition and processing but also by robots for farm automation, fans machines, and lots of appliances adopted for supporting any needs of the animal. Farmers, comprehensibly, do not want to adapt or change their electronic devices installed in the farm, and pretend the reader of the tags is perfectly working, despite noises.

Several attempts have been made to shield an area where the reader is installed, in order to make the LF passive tag readable, but without appreciable results, while instead increasing the cost of the system.

Nowadays, reading LF tags may still be affected by errors, meaning that the identification of the animal may fail or at least be delayed, since it has to be repeated.

The problem at the base of the present invention is to provide a system which is reliable and robust to read fast and accurately, without influence of electromagnetic noises, despite presence of a plurality of electronic devices, other animal tags or appliances for animal treatment also at a short distance from the reader, and overcoming all the drawbacks that currently affects the system as presently known.

### Summary of the invention

The idea of the present invention is that of providing a system for reading information associated to an animal, in particular for reading a unique identifier of the animal, by means of selection of only one signal among a plurality of signals received from a plurality ultra-highfrequency long-range active tags which are attached to a corresponding plurality of animals and emit said signals at long-range and high-frequencies. Ultra-high frequency long-range active tags in general operate either at sub-G frequency (866-960MHz) or at 2.4GHz. They are used, in general, for monitoring activity of animals.

The selected signal is the one corresponding to the animal to be processed at a known space, and all the other signals are treated differently (or disregarded) since associated to animals not at the known space.

Advantageously, ultra-high frequency active tags (hereafter also indicated briefly as active tags) are less influenced by electromagnetic noises in low frequency range (like motors, farm robots, fans), since operating at higher frequencies than passive tags.

Moreover, active tags are already widely used on animals for different purposes, such as for collecting real time date of animal activities (rumination, eating, resting, movement); therefore, it is advantageous providing a system able to read the unique identifier from the already available active tags for other applications (such as for weighting the animal, for monitoring feeding or for guiding the animal towards certain paths), so as the farmers are not required to replace or upgrade their tags on animals.

The reason why readings of active tags have not been implemented in the system as known for animal identification include difficulties in detecting the only one signal to be processed among a plurality of signals emitted by the active tags. Indeed, the active tags emit a signal typically in the range of 500 m (or more), meaning that each animal in the area of 500 m around the system may emit a signal towards the reader, making difficult to select only the signal of the animal at the known space, and disregard those associated to other animals, potentially very close to the known space.

According to the idea of solution given above, the technical problem at the base of the invention is solved by a system according to claim 1.

Preferred embodiments of the system for reading animal's tag are given in dependent claims 2 - 12.

Further features and advantages of the present invention will be apparent from the following description, given with reference to the annexed drawings only for exemplificative and not limiting purpose.

### Brief description of the drawings

Fig. 1 is a schematic top view of a system according to the present invention.
Fig. 2 is a schematic front view of the system according to fig. 1.
Fig. 3 schematically represents five animals, each associated to an active tag, in the area of the system of fig. 1.
Fig. 4 schematically represents the five animals of fig. 3 while processed by the system.
Fig. 5 schematically represents a result of processing the five animals of fig. 4, wherein only one of the animals (the tag thereof) is detected to be in a predetermined position, which is a position wherein the animal has to be processed.
Fig. 6 schematically represents another use case of the system including a reader and a milking parlor.
Fig. 7 schematically represents another use case of the system including a plurality of readers, each associated to a milting box among a plurality of milking boxes.
Fig. 8 schematically represents another use case of the system including a reader and a feeding bunk.
Fig. 9 schematically represents another use case of the system including two readers and two feeding bunks placed at different locations.
Fig. 10 schematically represents another use case of the system including one reader and two feeding bunks placed at different locations.

### Detailed description of the invention

A system for reading tags for livestock according to the present invention is disclosed hereafter.

More particularly, several embodiments of the system are disclosed, since the system may be adopted for different application and purposes.

Simpler embodiments, including only one tag, only one reader and only one predetermine space to be controlled are presented at the beginning of the description. Some possible applications of these embodiments are also given, such as for weighting an animal, for guiding the animal towards a path among a plurality of paths, for controlling the animal at milking or feeding.

More complicate embodiments of the system are disclosed subsequently. These embodiments may provide:
a) a plurality of animal tags controlled by one reader in one known space, and/or
b) a plurality of animal tags controlled by one reader in a plurality of known spaces, and/or
c) a plurality of animal tags controlled by a plurality of readers in a plurality of known spaces, each space associated to one reader.

The possible applications mentioned above, such as weighting animals, sorting animals towards paths, controlling the animals at milking or feeding, apply also to the more complicate embodiments a) to c).

Moreover, in all the embodiments, not only the at least one known space is controlled by the at least one reader but also the space around it. This space is indicated here after as "surrounding space". Surrounding space may be controlled, for instance, for statistical purposes, whereas the known space is controlled for the specific application (such as weighting, milking, feeding or, in its turn, statistics).

All the above will be clear from the following explanation, starting from the (simple) case of one tag, one reader and one predetermine space. Features which are in common between different embodiments are not repeated when more complicates scenarios are disclosed.

According to the present invention,
the system for reading tag for livestock includes:
- the animal tag,
- the reader, installed at a fixed position, for reading information from the animal tag and
- a processor.

Fixed position means for instance that a height of the reader from the ground is known.

According to different embodiments, the processor may be on-board the reader or in another device, in wired or wireless communication with the reader, such as a remote computer.

The information stored in the animal tag includes a unique identifier of the animal tag. In an embodiment, the unique identifier of the animal tag is the sole information taken by the reader from to the signal emitted by the active tag.

According to the invention, the animal tag is an active tag, for instance provided with a battery. The active tag is programmed to emit a radio signal, also said beacon, at predetermined intervals. For instance, the intervals is every second. Different intervals (longer or shorted may be set). Preferably, the active tag is programmed to emit the radio signal when located at a distance from the reader shorter than a predetermined distance, for instance 20 meters (shorter distances or longer distances may be set). This setting is to reduce consumption of the battery when the active tag is not proximate to the reader. For instance, the active tag includes a Bluetooth Low Energy (BLE) device emitting the radio signal (beaconing). However, the active tag may include a Ultra Wide Band device emitting the radio signal. Ultra-wideband (UWB) is a radio technology that can use a very low energy level for short-range, high-bandwidth communications over a large portion of the radio spectrum. The active tag includes a beaconing interface programmed to emit the radio signal; the beaconing interface is programmed to stay in a sleep mode by default and to wake up when a wake-up signal from the reader is received. The wake-up signal has a predetermined coverage, for instance 20 meters, so as only active tags within the predetermined coverage wake up. Beaconing is not made continuously, to reduce energy consumption of the active tag. This is accomplished by keeping the active tags always in sleep mode, also said "listening mode" (listening is not much consuming, whereas transmission is consuming), and when they get close to the reader (i.e. the AoA receiver), the reader sends a signal to the active tags) that enter in the range, causing them to start communicating with beaconing.

It has to be noted that it is the active tag which beacons and not the reader. The reader does not transmit information to the active tags, at least it does not transmit information necessary for the further processing of the tag. In particular, no information concerning the location of the reader is transmitted to the active tag. The information stored in the memory of the tag are not updated based on the signal transmitted by the reader.

The following description is given considering the active tag in the wake-up status, i.e. when they are beaconing.

The reader is configured to receive the radio signal emitted by the animal tag.
the processor is configured to:
- read the unique identifier from the radio signal,
- determine an angle of arrival, of the radio signal,
- determine a position of the animal tag based on the angle of arrival.

Based on the determined position, the animal tag may be subject to a further processing. Several examples of the further processing are given in the following description.
according to an embodiment, if the angle of arrival is within at least one predetermined range, the animal tag 3 is considered for further processing.

For instance, the predetermined range is set in a memory of the system.

The predetermined range is a range of angles, for instance included between angle γ1 and angle γ2. If the angle of arrival γ of the signal emitted by the tag is γ1 <γ< γ2, the tag is considered for further processing. Otherwise, it is not considered for further processing.

In particular, being the position of the reader fixed, for instance at the predetermined height, it may be ensured that the tag is at a known space, and therefore considered for further processing, when the angle of arrival γ of the signal emitted by the tag towards the reader is γ1 <γ< γ2.

Advantageously, the system is less sensitive to electromagnetic noise. The active tag emits an ultra-high frequency, for instance 2,4 GHz or sub-G (860-960MHz), and long-range radio signals. The system does not require special shielding since. Shielding is not required as the reader, through Angle of Arrival technology, is able to locate the origin (direction) of the signal, reliably and accurately.

A non-limiting example of application of the system concerns weighting the animal which bears the tag (ear-tag or collar typically).

When the term "tag" is used, according to what explained above, it has to be read as "active tag".

The tag is for instance attached to an ear of the animal or on the neck. If the ear tag emits the radio signal with an angle of arrival within the predetermined range, the animal is considered to be processed. The animal is at a known space when the angle of arrival of the signal is within the predetermined range. Therefore, the animal is processed when it is at the known space. A scale for weighting the animal is associated to the system. In this example, the processor is further configured to:
- read a weight measured by the scale;
- store the weight measured by the scale in association with the unique identifier of the animal tag which is at the known space.

The scale may be under a platform on which the animal steps to be weighted. The scale may be in or under the known space. However, this is not mandatory. For instance, the scale may be at a certain location in or under the reader which is not at the known space; in such case for instance, measuring the weight at the scale and associating the measured weight to the animal, i.e. associating the weight to the unique identifier of the tag, is made by the processor, according to an interface programmed for controlling the information collected from the reader (unique identifier) and from the scale (the weight of the animal). Of course, measures are taken to avoid that the weight of an animal is not associated to another animal; for instance, only one animal at a time is allowed to step on the weighting platform.

Another example of application of the system is for guiding an animal towards one among a plurality of paths. A sorting equipment, for instance one or more gates (or drafter), may be provided to guide the animal toward one path or another, for instance depending on the treatment to apply.

In this example, the processor is further configured to:
- determine one path among the plurality of paths, based on information read from the tag, when the tag is inside the known space, and
- actuate the sorting equipment to guide the animal which bears the tag towards said one path.

The sorting equipment may be at the known space (i.e. in the space wherefrom the radio signal is emitted towards the reader with the angle of arrival at the reader which is within the predetermined range) but this is not mandatory. For instance, the sorting equipment may be at a certain location different from the known space; in such case reading the unique identifier of the animal's tag at the known space and actuating the sorting equipment for the animal is made by the processor according to a programmed interface for controlling the information collected from the reader and for properly controlling the sorting equipment.

Another example relates to controlling a drinking device (for instance a water trough), a milking system, such as rotary or linear parlour (herringbone) or a feeding bunk. Since the animal has to drink one or more time in a day, it has to be milked one or more time and of course it also requires properly feeding, the system may control how many time the animal performs the above actions. This is very useful for statistics, such as how many litres of milk are produced for each single animal, also depending of the way in which the animal is fed.

According to this embodiment, the drinking device or the milking device or the feeding device is located at the known space, and the processor is configured to:
- determine that an animal which bears the tag has, respectively, drunk, been milked or eaten, if the position of the tag is inside the known space.

In all the embodiments mentioned above and in the more complex scenarios explained in the following description, timing is optionally counted by the system and associated to the information retrieved and processed by the processor.

For instance, a time when the animal tag is considered to be processed is recorded.

The processor may therefore:
- count how many times the animal tag is considered to be processed, within a predetermined time interval, for instance 24 hours and to
- determine how many times the animal which bears the tag has drunk, has been milked or has eaten within the predetermined time interval.

More complex scenarios of embodiment are disclosed hereafter.

In a first scenario, the system is still equipped with only one reader at a fixed position and configured to control the tag in the known space.

However, a plurality of tags is present in the surrounding space, in particular in an area wherein the tags are beaconing. In this scenario the processor may process also information retrieved from animal tags in the surrounding space. For instance, it may be useful to know that an animal tag has never entered the known space (or has entered it only few times) in a day, since this information is useful to identify the animal as scarcely fed, drunk or milked.

In this embodiment, the processor is configured to store the time when each tag of the plurality of tags is considered to be processed if never), and
- for each tag of the plurality of tags, to count how many times within a predetermined time interval the tag is considered to be processed.

Based on the information above, statistics are made.

The skilled person may appreciate that the applications provided above in connection with certain application (milking, drinking, feeding, sorting, weighting) and supported by the system are only some examples and further applications not herein mentioned may be as well supported by the system, without departing from the scope of protection of the claims.

Moreover, further adaptation may be considered, as explained below.

In some cases, farms are provided with complex parlours or other structures and devices supporting the life cycle of the animals. These structures may be arranged in different geometries, to cite some in one or more rows or circles, wherein each row or circle includes several spaces, each one dedicated to an animal. Geometrise may be also irregular or sparse. In these cases, it is useful to control the several spaces contemporarily. In other words, differently from the example provided before, in the embodiments hereafter explained the known space (to be controlled for further processing) is not one single space but a plurality of known spaces (to be controlled for further processing) wherein a plurality of animal may enter (for feeding, milking, drinking, etc). According to the invention, this is done by controlling a plurality of predetermined ranges of angles of arrival from which radio signals emitted from the animal tags have to be considered for further processing

In particular, according to different embodiments of the invention, the plurality of predetermined ranges may be controlled
a) by one reader or
b) by a plurality of readers, for instance one reader for each predetermined range of the plurality of predetermined ranges.

In case a) (i.e. only one reader), the reader is configured to:
- read information from the plurality of animal tags,
- receive the radio signal emitted by each tag of the plurality of tags, and the processor is configured to:
   - read the unique identifier from the radio signal emitted by each tag of the plurality of tag,
   - determine the angle of arrival of the radio signal emitted by each tag of the plurality of tag,
   - determine, among the plurality of tags, tags for further processing, as those emitting the radio signal with angle of arrival at the reader within one of said plurality of predetermined ranges. According to such embodiment the reader is placed in a position suitable to control all the angles of arrivals in the plurality of predetermined ranges. For instance, in case of a circular arrangement of the known spaces, the reader may be placed at the centre of the circular arrangement to clearly receive radio signal from all the tags, with low interference. In case of an arrangement in row of the known spaces, the reader may extend along the row, for instance with a plurality of antennas, to receive radio signal from the tags in the row, with low interference. Further details on antennas arrangement is explained subsequently in the description.

In case b) (a plurality of readers), each reader of the plurality of readers is arranged at a fixed position, different from the fixed position of the other reader of the plurality of readers, to control one predetermined range of the plurality of predetermined ranges.

Each reader of the plurality of readers is configured to read information from the plurality of animal tags, and
- each reader of the plurality of readers is configured to receive the radio signal emitted by each tag of the plurality of tags.

Moreover, for each reader of the plurality of readers, the processor is configured to:
- read the unique identifier from the radio signal emitted by each tag of the plurality of tag,
- determine the angle of arrival of the radio signal emitted by each tag of the plurality of tag, and
for each tag of the plurality of tag:
- determine that the tag has to be considered for further processing, if the angle of arrival is within the predetermined range controlled.

To summarize, according to this embodiment (case b), several readers are associated to several known spaces (for instance one-by-one), so as the tags inside the several spaces are detected by the several readers, and processed by the processor, according to the application be implemented (milking, feeding, drinking, etc...). Moreover, by using several readers placed in known positions and known heights, the animal's locations may be determined by using the angle of arrival determined by the several readers and correlating each of them with triangulation. Advantageously, physical positions of each animal in a known space can be calculated. Therefore, the system as disclosed may be further configured for animal tracking (real time position and tracking). This is particularly useful for indoor farm.

Hereafter, some preferred detailed embodiments of the reader are provided.

These detailed embodiments are not limiting examples and further adaptation may be made without departing from the scope of protection of the claims. Moreover, the features may be applied to one single reader or to all the readers of the system, if provided in plurality.

The reader may include an array of antennas arranged over or on a side of a known space from which, if the at least one tag is placed, emits the radio signal with the angle of arrival within the predetermined range. The antenna may be arranged at any location suitable to receive the radio signal.

The array of antennas includes at least five antennas.

Three among the five antennas are arranged along an x axis which is in a first direction
Three among the five antennas are arranged along an y axis which is a second direction perpendicular to the first direction.

One of the three antennas in the x axis is also an antenna of the three antennas in the y axis.

Moreover, the one of the three antennas in the x axis which is also an antenna of the three antennas in the y axis is arranged on a z axis perpendicular to the x axis and the y axis.

Preferably, the z axis is perpendicular to the ground.

An optimal position for reading the radio signal in the known space is at the intersection between the x, y, and z axis. A graphical interface or a LED system is used to indicate when the tag is at such intersection. A range -z1, +z1; -y1, +y1; -x1, +x1 around the intersection may be considered. The graphical interface or the LED system preferably is activated also when the tag is in the range around the intersection. Moreover, when the tag is outside the range of the intersection, the graphical interface or the LED system preferably indicates the alignment with the x axis or the y axis.

The known space is delimited by boundaries. For instance, two walls or gates delimit both lateral sides of the known space. The walls or gates are distanced to prevent two or more animals from entering side by side the known space. Boundaries may be provided for each known space, if a plurality of known spaces are controlled.

Hereafter, a brief explanation of an embodiment related to a weighting application is given with reference to the drawings. As said, this example is not limiting.

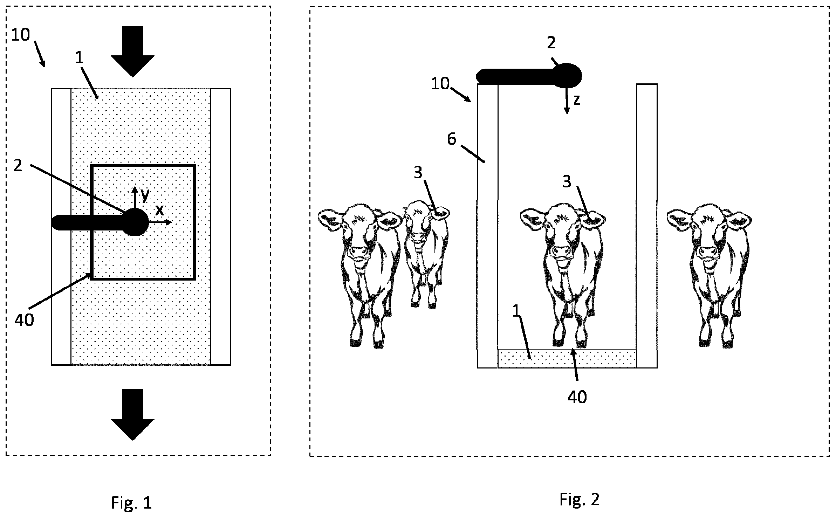

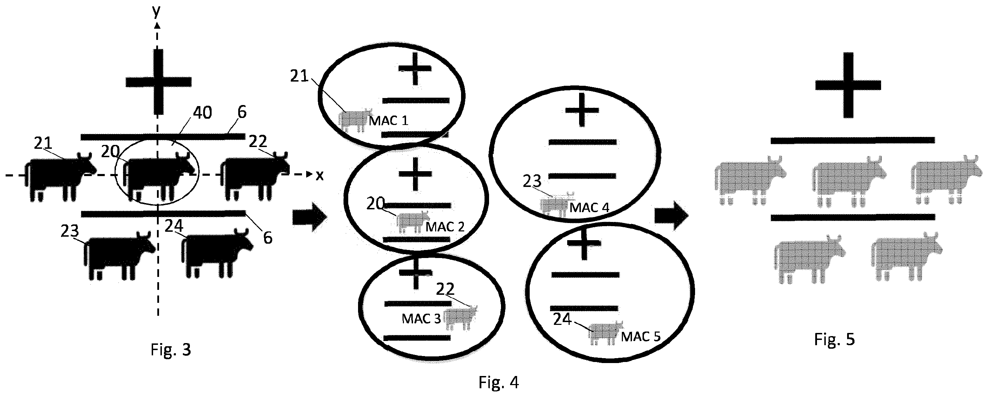

The system is indicated globally with number 10 in fig. 1; 1 denotes a weighting platform on which an animal step to be weighted; 2 is a reader installed over a known space 40 (the reader may be installed at other positions). Fig. 2 represents the system when a plurality of cows circulates around it. Only one cow is on the weighting platform 1, between two walls 6 thereof, but all the tags 3 attached to the cows transmits radio signals to the reader 2. Fig. 3 schematically represents five cows; one cow 20 is at the known space 40, between the walls 6. Two cows 21, 22 are respectively behind and in front of the cow 20; two cows 22, 23 are on a side of the cow 20. Fig. 4 is a different schematic view representing the position of each cow with respect to the walls 6, wherein only cow 20 is at the known space, from which the signal emitted by the tag forms the angled of arrival expected from the reader 2. Fig. 4 is provided to briefly explain capabilities of the reader and processor. As said before, the antenna of the reader over the known space may include 5 antennas, three arranged in the direction x of the weighting platform, where the cows 20, 21, 23 are aligned; three arranged in the direction y, which is perpendicular to direction x. the known space is where direction x cross directions y, more particularly a space interval (a set of 3D coordinates) around such intersection. Based on the angle of arrival, the processor determines that cow 20 is at the known space (to be processed); and cows 21-24 at the surrounding space (not to be processed); moreover, and still based on the angle of arrival, the processor determines that cow 21-22 is along the axis x, i.e. respectively the next cow to be processed and the previously processed cow, since entering and going out from the weighting platform, respectively. Further, and still based on the angle of arrival, the processor determines that cows 24, 23 are not aligned with x or y axis. Therefore, also the location of different cows in the surrounding space is distinguished.

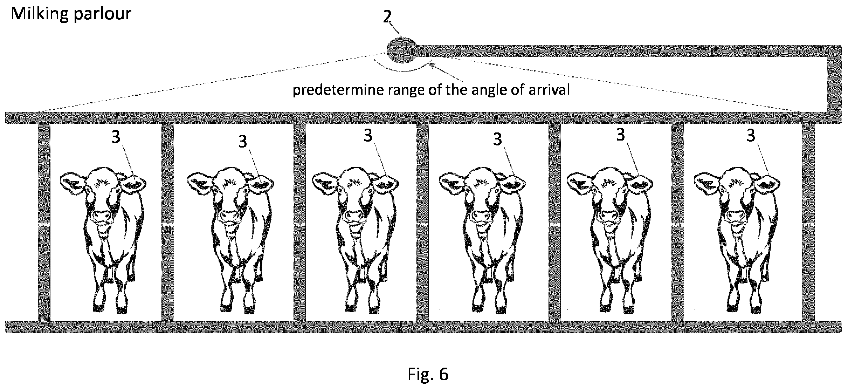

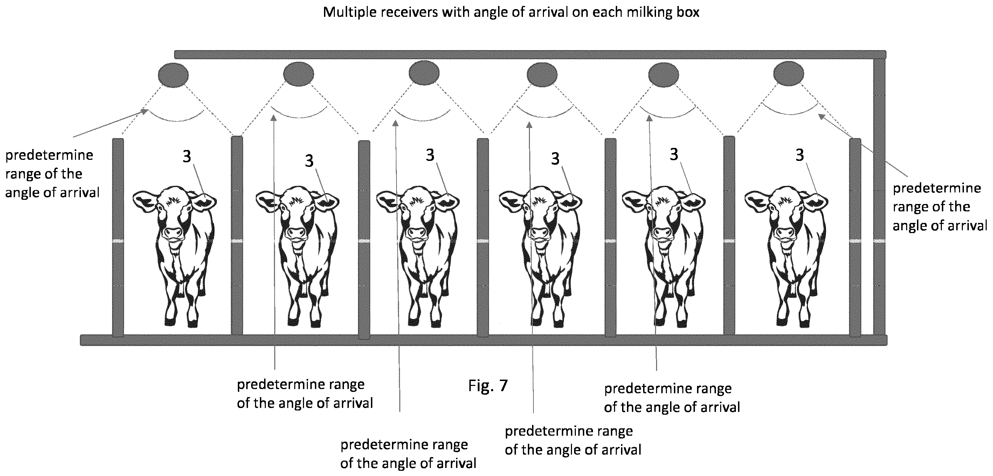

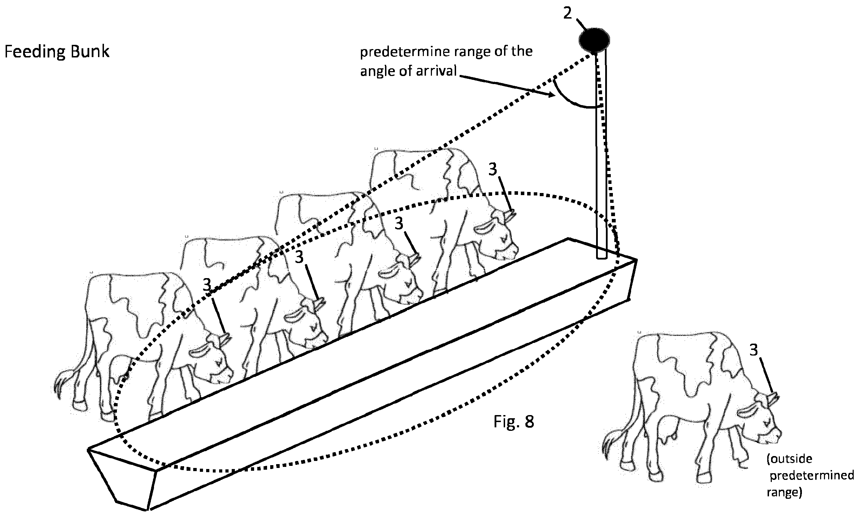

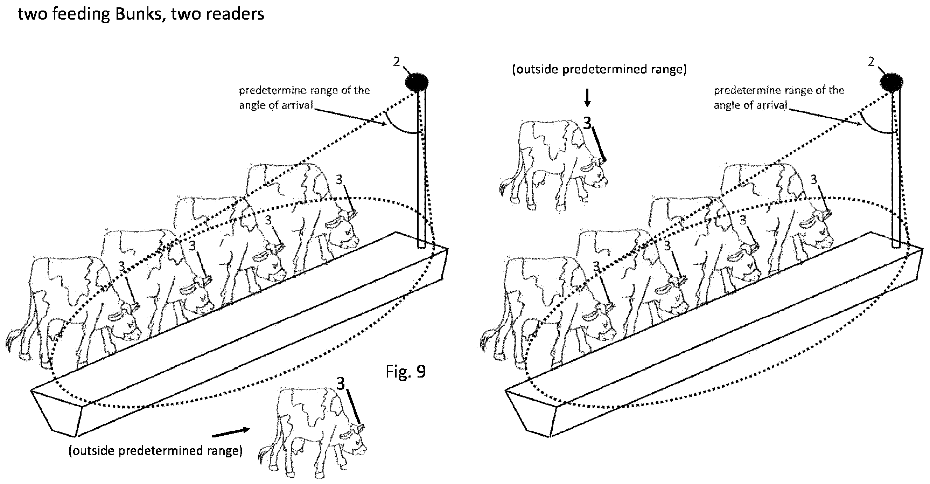

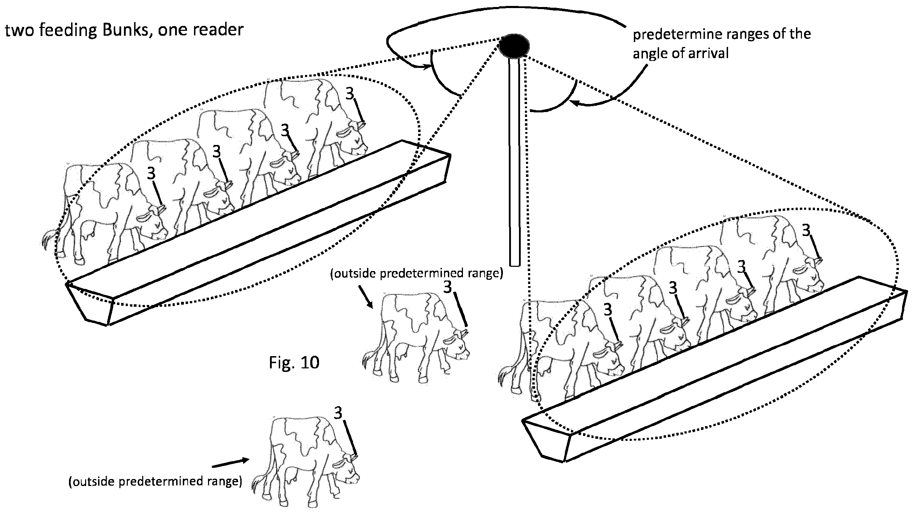

Figure 6 to 10 schematically represent some use cases of the system of the present invention. In figure 6, the reader is installed to identify animal at a milking parlour, and therefore to check which animal is or has not been milked in a day (or how many times per day). In figure 7, a plurality of readers are used; each reader is associated to a milting box among a plurality of milking boxes. In figure 8, the reader is installed to identify animal at a feeding bunk, to check if an animal has been fed (or how many times each animal has been fed per day). In figure 9, two feeding bunks are present at different locations and one reader is associated to each one of the feeding bunks. In another embodiment of figure 10, the two feeding bunks are still present at different locations but only one reader is associated to both. Whereas in the description above some use cases of the system have been given, the skilled person may promptly recognize that many further uses cases are supported and falls within the scope of protection of the claims. To cite one, the system may be adopted to identify animal in race-way condition, when they pass in a corridor going into a specific area (pen or shed) and they have to be identified, to know which animals are in each pen. At a race-way location, animals typically move in single file at cow walking speed; they are frequently head-to-tail, with no gap therebetween, and animals located outside the race-way location, although in very close proximity to the race-way (for instance less than 1 m away) has not to be identified. The system of the present invention is well suitable to support also the race way condition, without impeding cow progress through the race-way. The reader may be advantageously placed at a height and position to prevent collisions with animals and preventing obstruction for human passage either, if installed overhead, high enough to clear human standing height.

## Claims

1. System (10) for reading tags for livestock, the system including
- a plurality of animal tags (3),
- at least one reader (2) installed at a fixed position ;
- the plurality of animal tags (3) are active tags (3),
- the at least one reader (2) is configured to receive a radio signal emitted by the plurality of animal tags (3), the plurality of animal tags (3) are configured to emit the radio signal at predetermined intervals,
the system further includes a processor configured to:
- read the unique identifier from the radio signal,
- determine an angle of arrival of the radio signal,
- determine a position of the plurality of animal tags (3) based on the angle of arrival of the radio signal,
**characterized by** the fact that
said plurality of animal tags (3) include a beaconing interface programmed to emit said radio signal, wherein the beaconing interface is programmed to stay in a listening mode by default and to wake up when a wake-up signal from the reader is received,
the wake-up signal from the reader has a predetermined coverage so as the plurality of animal tags (3) wake up only when placed within the predetermined coverage, wherein the radio signal at predetermined intervals is emitted by the beaconing interface if the wake-up signal is received,
the processor is further configured to:
- determine that one animal tag (3) having the determined position has to be considered for further processing, based on said determined position.

2. System (10) according to claim 1, **characterized by** the fact that the processor is further configured to apply said further processing, if the angle of arrival is within at least one predetermined range, wherein the angle of arrival is representative of said position of the one animal tag (3) with respect to the fixed position of the at least one reader (2).

3. System (10) according to claim 1, including a scale for weighting an animal bearing the one animal tag (3), wherein
the processor is further configured to:
- read a weight measured by the scale;
- store said weight measured by the scale in association with the unique identifier of the one animal tag (3) which is considered for further processing.

4. System (10) according to claim 1, including a sorting equipment for guiding an animal towards one among a plurality of paths,
the processor is further configured to:
- determine the one among the plurality of paths, based on information read in the one animal tag (3) which is considered for further processing,
- actuate the sorting equipment to guide an animal which bears said one animal tag (3) considered for further processing towards said one path.

5. System (10) according to claim 1, including at least one drinking point, for instance a water trough, or at least one milking system, for instance a rotary or herringbone, or at least one feeding device wherein an animal may, respectively, drink, be milked or eat,
- the at least one drinking point or milking system or feeding device is in at least one predetermined space (40) from which, if the one animal tag (3) is placed, it is considered for further processing,
the processor is further configured to:
- determine that an animal which bears said one tag (3) has, respectively, drunk, been milked or eaten.

6. System (10) according to any one of claims from 2 to 5, wherein the processor is further configured to
- store a time when the one animal tag (3) is considered for further processing.

7. System (10) according to claims 5 and 6, wherein the processor is further configured to
- count how many times the one animal tag (3) is considered for further processing, within a predetermined time interval, for instance 24 hours and to
- determined how many times the animal which bears the one animal tag (3) have drunk, been milked or eaten within the predetermined time interval.

8. System (10) according to claim 5, **characterized by** the fact that said at least one reader (2) includes an array of antennas arranged over or on a side of the at least one known space (40) from which, if the at one tag is placed, emits the radio signal with the angle of arrival within the at least one predetermined range.

9. System (10) according to claim 8, **characterized by** the fact that said array of antennas includes at least five antennas, wherein three among the five antennas are arranged along an x axis which is in a first direction and three among the five antennas are arranged along an y axis which is a second direction perpendicular to the first direction, wherein one of the three antennas in the x axis is also an antenna of the three antennas in the y axis.

10. System (10) according to claim 9, **characterized by** the fact that the one of the three antennas in the x axis which is also an antenna of the three antennas in the y axis is arranged on a z axis perpendicular to the x axis and the y axis.

11. System according to claim 8, **characterized by** including two walls or gates (6) delimiting both lateral sides of said at least one known space (40), wherein the walls or gates (6) are distanced to prevent two or more animals from entering side by side said at least one known space (40).

12. System according to claim 1, **characterized by** including the processor in said at least one reader (2).

## Patentansprüche

1. System (10) zum Auslesen von Etiketten für Vieh, wobei das System umfasst
• eine Mehrzahl von Tieretiketten (3),
• mindestens ein Lesegerät (2), das an einer festen Position installiert ist;
• wobei die Mehrzahl von Tieretiketten (3) aktive Etiketten (3) sind,
• das mindestens eine Lesegerät (2) ist so konfiguriert, dass es ein von der Mehrzahl von Tieretiketten (3) ausgesendetes Funksignal empfängt; die Mehrzahl von Tieretiketten (3) sind so konfiguriert, dass sie das Funksignal in vorgegebenen Intervallen aussendet,
das System umfasst ferner einen Prozessor, der dazu konfiguriert ist:
• die eindeutige Kennung aus dem Funksignal auszulesen,
• den Einfallswinkel des Funksignals zu bestimmen,
• die Position der Mehrzahl Tieretiketten (3) anhand des Einfallswinkels des Funksignals zu bestimmen,
**dadurch gekennzeichnet, dass**
die Mehrzahl Tieretiketten (3) eine Beaconing-Schnittstelle umfassen, die so programmiert ist, dass sie das Funksignal aussendet, wobei die Beaconing-Schnittstelle so programmiert ist, dass sie standardmäßig im Empfangsmodus verbleibt und bei Empfang eines Wecksignals vom Lesegerät aktiviert wird, das Wecksignal des Lesegeräts hat eine vorgegebene Reichweite, sodass die Mehrzahl Tieretiketten (3) nur dann aktiviert werden, wenn sie sich innerhalb dieser Reichweite befinden, wobei das Funksignal in vorgegebenen Intervallen von der Beaconing-Schnittstelle ausgesendet wird, sobald das Wecksignal empfangen wird,
wobei der Prozessor ferner so konfiguriert ist, dass er:
• feststellt, dass ein Tieretikett (3) mit der ermittelten Position auf der Grundlage dieser ermittelten Position für die weitere Verarbeitung berücksichtigt werden muss.

2. System (10) nach Anspruch 1, **dadurch gekennzeichnet, dass** der Prozessor ferner so konfiguriert ist, dass er die weitere Verarbeitung durchführt, wenn der Einfallswinkel innerhalb mindestens eines vorgegebenen Raums liegt, wobei der Einfallswinkel die Position des einen Tieretiketts (3) in Bezug auf die feste Position des mindestens einen Lesegeräts (2) angibt.

3. System (10) nach Anspruch 1, umfassend eine Waage zum Wiegen eines Tieres, das mit dem einen Tieretikett (3) versehen ist, wobei der Prozessor ferner so konfiguriert ist, dass er:
• das von der Waage angezeigte Gewicht abliest;
• das von der Waage gemessene Gewicht in Verbindung mit der eindeutigen Kennung der einen Tiermarke (3), die für die weitere Verarbeitung vorgesehen ist, speichert.

4. System (10) nach Anspruch 1, umfassend eine Sortieranlage, um ein Tier auf einen von einer Mehrzahl von Pfaden zu leiten,
wobei der Prozessor ferner so konfiguriert ist, dass er:
• den einen aus der Mehrzahl von Pfaden auf der Grundlage von Informationen zu bestimmen, die aus dem einen Tieretikett (3) ausgelesen wurden, das für die weitere Verarbeitung in Betracht gezogen wird,
• die Sortieranlage so steuern, dass ein Tier, das das für die Weiterverarbeitung vorgesehene Tieretikett (3) trägt, auf den genannten Weg geleitet wird.

5. System (10) nach Anspruch 1, das mindestens eine Tränke, beispielsweise einen Wassertrog, oder mindestens eine Melkanlage, beispielsweise eine Karussell- oder Fischgrätenmelkanlage, oder mindestens eine Fütterungsvorrichtung umfasst, an der ein Tier trinken, gemolken werden oder fressen kann,
• die mindestens eine Tränke, Melkanlage oder Fütterungsvorrichtung befindet sich in mindestens einem vorgegebenen Raum (40), von dem aus das Tier, sofern das eine Tieretikett (3) angebracht ist, für die weitere Verarbeitung berücksichtigt wird,
wobei der Prozessor ferner so konfiguriert ist, dass er:
• feststellt, ob ein Tier, das das Tieretikett (3) trägt, getrunken, gemolken oder gefressen hat.

6. System (10) nach einem der Ansprüche 2 bis 5, wobei der Prozessor ferner so konfiguriert ist, dass er
• den Zeitpunkt speichert, zu dem das eine Tieretikett (3) für die weitere Verarbeitung herangezogen wird.

7. System (10) nach den Ansprüchen 5 und 6, wobei der Prozessor ferner so konfiguriert ist, dass er
• zählt, wie oft das eine Tieretikett (3) innerhalb eines vorgegebenen Zeitraums, beispielsweise 24 Stunden, für die weitere Verarbeitung berücksichtigt wird, und
• ermittelt, wie oft das Tier, das mit dem Tieretikett (3) versehen ist, innerhalb des vorgegebenen Zeitraums getrunken, gemolken oder gefressen hat.

8. System (10) nach Anspruch 5, **dadurch gekennzeichnet, dass** das mindestens eine Lesegerät (2) eine Anordnung von Antennen umfasst, die über oder an einer Seite des mindestens einen bekannten Raums (40) angeordnet sind, von dem aus, wenn sich das mindestens eine Etikett dort befindet, das Funksignal mit einem Einfallswinkel innerhalb des mindestens einen vorgegebenen Bereichs ausgesendet wird.

9. System (10) nach Anspruch 8, **dadurch gekennzeichnet, dass** die Antennenanordnung mindestens fünf Antennen umfasst, wobei drei der fünf Antennen entlang einer x-Achse angeordnet sind, die in einer ersten Richtung verläuft, und drei der fünf Antennen entlang einer y-Achse angeordnet sind, die eine zweite Richtung senkrecht zur ersten Richtung bildet, wobei eine der drei Antennen auf der x-Achse gleichzeitig eine der drei Antennen auf der y-Achse ist.

10. System (10) nach Anspruch 9, **dadurch gekennzeichnet, dass** diejenige der drei Antennen auf der x-Achse, die zugleich eine der drei Antennen auf der y-Achse ist, auf einer zur x-Achse und zur y-Achse senkrechten z-Achse angeordnet ist.

11. System nach Anspruch 8, **dadurch gekennzeichnet, dass** es zwei Wände oder Tore (6) umfasst, die beide Seiten des mindestens einen bekannten Raums (40) begrenzen, wobei die Wände oder Tore (6) so voneinander beabstandet sind, dass verhindert wird, dass zwei oder mehr Tiere nebeneinander in den mindestens einen bekannten Raum (40) gelangen.

12. System nach Anspruch 1, **dadurch gekennzeichnet, dass** der Prozessor in dem mindestens einen Lesegerät (2) enthalten ist.

## Revendications

1. Système (10) de lecture d'étiquettes pour bétail, le système incluant
- une pluralité d'étiquettes d'animaux (3),
- au moins un lecteur (2) installé à une position fixe ;
- la pluralité d'étiquettes d'animaux (3) sont des étiquettes actives (3),
- l'au moins un lecteur (2) est configuré pour recevoir un signal radio émis par la pluralité d'étiquettes d'animaux (3), la pluralité d'étiquettes d'animaux (3) sont configurées pour émettre le signal radio à des intervalles prédéterminés,
le système comporte en outre un processeur configuré pour :
- lire l'identifiant unique à partir du signal radio,
- déterminer un angle d'arrivée du signal radio,
- déterminer une position de la pluralité d'étiquettes d'animaux (3) sur la base de l'angle d'arrivée du signal radio,
**caractérisé par le fait que**
ladite pluralité d'étiquettes d'animaux (3) comportent une interface de balisage programmée pour émettre ledit signal radio, dans lequel l'interface de balisage est programmée pour rester dans un mode d'écoute par défaut et pour se réveiller lorsqu'un signal de réveil est reçu en provenance du lecteur,
le signal de réveil provenant du lecteur présente une couverture prédéterminée de sorte que la pluralité d'étiquettes d'animaux (3) ne se réveillent que lorsqu'elles sont placées dans la couverture prédéterminée, dans lequel le signal radio est émis à des intervalles prédéterminés par l'interface de balisage si le signal de réveil est reçu,
le processeur est en outre configuré pour :
- déterminer qu'une étiquette d'animal (3) ayant la position déterminée doit être considérée pour un traitement ultérieur, sur la base de ladite position déterminée.

2. Système (10) selon la revendication 1, **caractérisé en ce que** le processeur est en outre configuré pour appliquer ledit traitement supplémentaire, si l'angle d'arrivée est situé dans au moins une plage prédéterminée, dans lequel l'angle d'arrivée est représentatif de ladite position de l'étiquette d'animal (3) par rapport à la position fixe de l'au moins un lecteur (2).

3. Système (10) selon la revendication 1, incluant une balance pour peser un animal portant l'étiquette d'animal (3), dans lequel
le processeur est en outre configuré pour :
- lire un poids mesuré par la balance ;
- enregistrer ledit poids mesuré par la balance en association avec l'identifiant unique de l'une des étiquettes d'animaux (3) qui est considérée pour un traitement ultérieur.

4. Système (10) selon la revendication 1, incluant un équipement de tri pour guider un animal vers un chemin parmi une pluralité de chemins,
le processeur est en outre configuré pour :
- déterminer le chemin parmi la pluralité de chemins, sur la base d'informations lues sur l'étiquette d'animal (3) qui est considérée pour un traitement ultérieur,
- actionner l'équipement de tri pour guider un animal qui porte ladite étiquette d'animal (3) considérée pour un traitement ultérieur vers ledit chemin.

5. Système (10) selon la revendication 1, incluant au moins un point d'abreuvement, par exemple un abreuvoir, ou au moins un système de traite, par exemple un dispositif rotatif ou à chevrons, ou au moins un dispositif d'alimentation dans lequel un animal peut, respectivement, boire, être trait ou manger,
- l'au moins un point d'abreuvement, système de traite ou dispositif d'alimentation se trouve dans au moins un espace prédéterminé (40) à partir duquel, si l'étiquette d'animal (3) est placée, celle-ci est considérée pour un traitement ultérieur,
le processeur est en outre configuré pour :
- déterminer qu'un animal qui porte ladite étiquette (3) a, respectivement, bu, mangé ou été trait.

6. Système (10) selon l'une quelconque des revendications 2 à 5, dans lequel le processeur est en outre configuré pour
- enregistrer un moment auquel l'étiquette d'un animal (3) est considérée pour un traitement ultérieur.

7. Système (10) selon les revendications 5 et 6, dans lequel le processeur est en outre configuré pour
- compter le nombre de fois qu'une étiquette d'animal (3) est considérée pour un traitement ultérieur, dans un intervalle de temps prédéterminé, par exemple 24 heures, et pour
- déterminer le nombre de fois que l'animal qui porte l'étiquette d'animal (3) a bu, mangé ou été trait dans l'intervalle de temps prédéterminé.

8. Système (10) selon la revendication 5, **caractérisé en ce que** ledit au moins un lecteur (2) comporte un réseau d'antennes agencées au-dessus ou sur un côté de l'au moins un espace connu (40) à partir duquel, si l'étiquette est placée, le signal radio est émis avec l'angle d'arrivée dans l'au moins une plage prédéterminée.

9. Système (10) selon la revendication 8, **caractérisé en ce que** ledit réseau d'antennes comporte au moins cinq antennes, dans lequel trois parmi les cinq antennes sont disposées le long d'un axe x qui est dans une première direction et trois parmi les cinq antennes sont agencées le long d'un axe y qui est une deuxième direction perpendiculaire à la première direction, dans lequel l'une des trois antennes dans l'axe x est également une antenne des trois antennes dans l'axe y.

10. Système (10) selon la revendication 9, **caractérisé en ce que** l'une des trois antennes dans l'axe x qui est également une antenne des trois antennes dans l'axe y est agencée sur un axe z perpendiculaire à l'axe x et à l'axe y.

11. Système selon la revendication 8, **caractérisé en ce qu'**il comporte deux parois ou portes (6) délimitant les deux côtés latéraux dudit au moins un espace connu (40), dans lequel les parois ou portes (6) sont espacées pour empêcher deux animaux ou plus d'entrer côte à côte dans ledit au moins un espace connu (40).

12. Système selon la revendication 1, caractérisé en qu'il comporte le processeur dans ledit au moins un lecteur (2).
